# EUROPÄISCHE PATENTANMELDUNG

(11) **EP 4 776 244 A1**
(43) Veröffentlichungstag der Anmeldung: **15.07.2026**
(21) Anmeldenummer: 26150861.8
(22) Anmeldetag: 08.01.2026
(51) Int. Cl.: G06V 10/82, G06V 40/16, G06V 40/40

(54) **COMPUTERIMPLEMENTIERTES VERFAHREN, SYSTEM ZUR DATENVERARBEITUNG UND COMPUTERPROGRAMMPRODUKT**

(30) Priorität: 13.01.2025 DE 102025100956
(71) Anmelder: Secunet Security Networks Aktiengesellschaft, 45138 Essen (DE)
(72) Erfinder: Merkle, Johannes, 65719 Hofheim (DE)
(74) Vertreter: Andrejewski - Honke Patent- und Rechtsanwälte Partnerschaft mbB

(57) **Zusammenfassung**

Die Erfindung betrifft ein computerimplementiertes Verfahren zur Bewertung der Authentizität einer das Gesicht einer Person darstellenden Eingabebilddatei (1), insbesondere zur Erkennung von durch Kl-Verfahren synthetisch erzeugten Bildern. Dieses umfasst erfindungsgemäß die Schritte:
• Empfangen oder Laden der Eingabebilddatei (1),
• Empfangen, Laden oder Aufnehmen eines verifizierten Referenzbildes (2), welches eine Person darstellt,
• Ermitteln eines ersten Merkmalsvektors (3a) aus der Eingabebilddatei (1),
• Ermitteln eines zweiten Merkmalsvektors (3b) aus dem Referenzbild (2) und
• Ermitteln eines Ausgabewerts (6) aus dem ersten Merkmalsvektor (3a) und dem zweiten Merkmalsvektor (3b) durch einen nicht-metrischen Klassifikator (5).

Die Erfindung betrifft ferner ein System zur Datenverarbeitung umfassend Mittel zur Ausführung der Schritte des Verfahrens sowie ein Computerprogrammprodukt.

## Beschreibung

Die Erfindung betrifft ein computerimplementiertes Verfahren zu Bewertung der Authentizität einer das Gesicht einer Person darstellenden Eingabebilddatei. Das Verfahren dient insbesondere zur Erkennung von durch KI-Verfahren synthetisch erzeugten Bildern Weiterhin ist Gegenstand der Erfindung ein darauf gerichtetes System zur Datenverarbeitung sowie ein Computerprogrammprodukt.

Es bestehen mehrere Ansätze entsprechende falsche Darstellungen, kurz sogenannte Fakes, zu erzeugen. Neben der klassischen Fotomontage, bei der mit analogen oder digitalen Mitteln Bildausschnitte in ein anderes Bild übertragen werden, bestehen auch viele Möglichkeiten der Bildmanipulation, welche Bildinhalte unter Verwendung von neuronalen Netzwerken und anderen Techniken der sogenannten "Künstlichen Intelligenz" (Kl) synthetisch generieren und/oder ineinander übertragen.

In den vergangenen Jahren hat die Technologie auf dem Gebiet der Generierung synthetischer Bilddateien große Fortschritte gemacht. Insbesondere die Generierung von an reale Person angelehnte bzw. diese darstellenden Bildern wird vielfältig eingesetzt, um nicht real existierende Situationen und/oder Personen darzustellen. Leider werden entsprechende Bilder häufig dazu eingesetzt Personen, insbesondere politische Gegner zu diffamieren und/oder die Meinung der Rezipienten zu manipulieren.

Als besonders leistungsfähig bei der Generierung von synthetischen Bildern haben sich Technologien der tiefen neuronalen Netze erwiesen. Diese nutzen eine große Zahl von hintereinander geschalteten Schichten (Layern), um aus den Eingabedaten die Ausgabedaten zu generieren. Für die Generierung künstlicher Bilder werden meist Variational Auto-Encoder, Generative Adversarial Networks (GANs) oder Diffusion-Modelle verwendet.

Inzwischen gibt es zahlreiche Webseiten und Apps, die es Anwendern auch ohne jede Fachkenntnis ermöglichen, realistisch aussehende synthetische Bilder und Videos mit vorgegebenen Inhalten durch Eingabe von beschreibenden Texten ("Prompts") zu erzeugen, in echten Bildern und/oder Videos die Gesichter mit denen einer anderen Person zu ersetzen ("Face Swapping") oder die die Mimik von Gesichtern in echten Bildern auf die Gesichter in anderen Bildern / Videos zu übertragen ("Face Reenactment"). Durch solche Deep Neural Networks generierte Inhalte, welche bewusst einen falschen Sachverhalt darstellen, werden auch als Deep Fakes bezeichnet.

Um sich gegen die manipulativen Wirkungen von Deep Fakes zu schützen, ist deren automatisierte Erkennung mit technischen Mitteln wünschenswert. Entsprechend beschäftigt sich die Erfindung mit der Erkennung der Authentizität einer das Gesicht einer Person darstellenden Eingabebilddatei. In diesem Zusammenhang meint Authentizität die Wahrhaftigkeit in dem Sinne, dass die Bilddatei tatsächlich die Darstellung einer realen Person ist und diese tatsächlich in dieser Form in der Realität existiert hat und in dieser Situation aufgenommen wurde. Hiervon abzugrenzen sind Situationen, in denen beispielsweise das Gesicht einer realen Person in ein anderes Bild übertragen wurde oder vollständig in einer computergenerierten Darstellung erschaffen wurde.

Die unterschiedlichen Möglichkeiten zur Generierung von Fakes erschweren gleichzeitig deren automatisierte Erkennung. Beispielsweise können einfache Bildmontagen häufig über Kantenerkennungen oder Auffälligkeiten in Farbwertverläufen aufgedeckt werden. Ebenso gibt es Erkennungsalgorithmen, welche Inkonsistenzen zwischen biometrischen Merkmalen im Inneren und am Rand eines Gesichts registrieren.

Auch die Verwendung von Gesichtserkennungs-Algorithmen zur Erkennung von Fakes wurde erprobt, die Ergebnisse sind jedoch nicht zufriedenstellend. Hierbei ist problematisch, dass vor allem neuronale Netzwerke zu Erzeugung von einer Person ähnlichen Bilddarstellungen darauf optimiert sind einen möglichst geringen Merkmalsabstand und damit eine möglichst große optische Ähnlichkeit zwischen dem künstlichen Bild und der Zielperson herzustellen. Die Erkennung von solchen Deep Fakes mithilfe einer vergleichenden Gesichtserkennung ist daher nicht möglich.

Vor diesem Hintergrund liegt der Erfindung die Aufgabe zugrunde, ein Verfahren anzugeben, mit dem die Authentizität einer Eingabebilddatei mit großer Signifikanz überprüft werden kann. Dabei soll zu der Eingabebilddatei ein Ausgabewert berechnet werden, welcher mit der Sicherheit korreliert, ob das Bild authentisch ist oder künstlich erzeugt bzw. manipuliert wurde. Gegenstand der Erfindung und Lösung dieser Aufgabe ist ein computerimplementiertes Verfahren nach Anspruch 1, ein System zur Datenverarbeitung nach Anspruch 20 sowie ein Computerprogrammprodukt nach Anspruch 22. Bevorzugte Ausgestaltungen sind jeweils in abhängigen Unteransprüchen angegeben.

Im Rahmen des erfindungsgemäßen Verfahrens zur Bewertung der Authentizität einer das Gesicht einer Person darstellenden Eingabebilddatei werden die folgenden Schritte durchgeführt: Empfangen oder Laden der Eingabebilddatei, Empfangen, Laden oder Aufnehmen eines verifizierten (d.h. bekanntermaßen authentischen) Referenzbilds, welches das Gesicht einer - insbesondere derselben - Person darstellt, Ermitteln eines ersten Merkmalsvektors aus der Eingabebilddatei, Ermitteln eines zweiten Merkmalsvektors aus dem verifizierten Referenzbild und Ermitteln eines Ausgabewerts aus dem ersten Merkmalsvektor und dem zweiten Merkmalsvektor durch einen nicht-metrischen Klassifikator. Anschließend kann der Ausgabewert und/oder eine aus dem Ausgabewert abgeleitete Größe ausgegeben oder versendet werden.

In einem Schritt wird die Eingabebilddatei durch Laden aus einem Speicher oder durch Empfangen von einem anderen Computersystem bereitgestellt. Die Eingabebilddatei ist dabei die zu überprüfende Computerdatei, welche beispielsweise auf einem Computerbildschirm wiedergegeben oder ausgedruckt werden kann und dabei den entsprechenden Bildinhalt überträgt. Insbesondere lässt sich daraus eine zweidimensionale Verteilung von Farb- und/oder Helligkeitswerten ableiten, welche auch durch ein Computer verarbeitet werden können.

In entsprechender Weise kann das verifizierte Referenzbild ebenfalls durch Laden oder Empfangen bereitgestellt werden. Weiterhin besteht die Möglichkeit, ein verifiziertes Referenzbild zur Laufzeit des Verfahrens unmittelbar durch eine entsprechende digitale Aufnahmevorrichtung aufzunehmen.

Sowohl die Eingabebilddatei als auch das verifizierte Referenzbild umfassen jeweils die Darstellung eines Gesichts zumindest einer - bevorzugt derselben - Person. Ohne Beschränkung kann es sich dabei um eine Portraitaufnahme einer einzelnen Person handeln. Dies ist besonders bevorzugt für das verifizierte Referenzbild der Fall.

Vorzugsweise umfasst das Verfahren Schritte, um aus der Eingabebilddatei und/oder dem verifizierten Referenzbild die Darstellung jeweils genau eines menschlichen Gesichts zu extrahieren, aus der der erste bzw. zweite Merkmalsvektor zumindest teilweise bestimmt wird. Dies umfasst insbesondere Schritte zum (automatisierten) Erkennen, Auswählen und/oder Zuschneiden des Gesichts.

Verifiziert meint im Rahmen der Erfindung, dass die die Authentizität des Bildes und die Identität der aufgenommenen Person verbürgt ist. Dies kann z.B. durch Bildagenturen geschehen. Insbesondere kann Referenzbild unter kontrollierten Bedingungen aufgenommen werden, sodass sichergestellt ist, dass das Referenzbild tatsächlich die Darstellung einer realen Person und eben kein Fake ist. Die Verifikation umfasst insbesondere Maßnahmen, welche sicherstellen, dass die Identität der abgebildeten Person vorliegt und korrekt ist, dass die Aufnahmemittel zu Erzeugung des verifizierten Referenzbildes korrekt arbeiten und insbesondere nicht manipuliert wurden und dass das dadurch entstandene Bild anschließend während der Übertragung und/oder Speicherung nicht verändert wurde. Eine entsprechende vertrauenswürdige Umgebung kann beispielsweise von vertrauenswürdigen Stellen und/oder Behörden bereitgestellt werden.

Im Zuge der Erfindung ist vorgesehen, dass sowohl der erste Merkmalsvektor, welche aus der Eingabebilddatei erzeugt wird als auch der aus dem verifizierten Referenzbild generierte zweite Merkmalsvektor einem nicht-metrischen Klassifikator zugeführt werden, um daraus einen Ausgabewert zu ermitteln. Nicht-metrisch bedeutet, dass der Ausgabewert unabhängig von einem "Abstand" zweier Eingabevektoren ist, welche eine Ähnlichkeitsrelation definiert. So können Abweichungen zwischen zwei Merkmalsvektoren zu einer negativen Einschätzung bzw. Übereinstimmung führen, wenn diese Abweichungen in bestimmten Positionen und/oder Mustern auftreten. Die Ausgabe des Klassifikators unterscheidet sich von einem Abstand im metrischen Raum, bei dem alle Dimensionen der Merkmalsvektoren - insbesondere gleich stark - gewichtet werden.

Der Ausgabewert des nicht-metrischen Klassifikators korrespondiert zu einer Konfidenz - d. h. zu einer numerischen Repräsentation der Wahrscheinlichkeit, ob es sich bei der Eingabebilddatei um ein genuines Bild einer realen Person handelt oder um eine synthetisch computergenerierte Darstellung - insbesondere einen sogenannten Deep Fake. Dabei wird dem einen Zustand bzw. dem einen Ergebnis ein numerischer Wert zugeordnet - z. B. 1 für die Erkennung eines Deep Fakes und der Wert 0 für die Bestätigung als authentisches Bild. Da eine eindeutige Zuordnung in den meisten Fällen nicht möglich ist, wird der Ausgabewerts bevorzugt als Fließkommazahl in dem Intervall der beiden Zustandswerte (z.B. von 0 bis 1) dargestellt. Je näher der Ausgabewerts an einem der beiden Zustandswerte an den Intervallgrenzen liegt, desto eher entspricht das Bewertungsergebnis dem jeweiligen Zustand.

Zur weiteren Verarbeitung der Ausgabewerte und/oder eine daraus abgeleiteten Größen können diese an einen Benutzer ausgegeben und/oder an ein weiteres Verarbeitungssystem versendet werden. Beispielsweise kann ein als (mit überwiegender Wahrscheinlichkeit) als Deep Fake erkanntes Bild abgelehnt oder von der weiteren Verarbeitung ausgeschlossen werden. Ebenso kann einem Benutzer ein Warnhinweis angezeigt werden, dass z. B. bei einer (insbesondere öffentlichen) Wiedergabe der Eingabebilddatei es sich möglicherweise um eine Fälschung handeln könnte.

Die Erfindung beruht auf der Erkenntnis, dass - insbesondere aufbauend auf einer biometrischen Gesichtserkennung - eine Klassifizierung einer Bilddatei als synthetisches Bild (Fake) oder genuines Bild einer realen Person möglich ist. Dies beruht auf dem Umstand, dass zwar eine Generierung von optischen und physiognomisch ähnlichen Gesichtsdarstellungen im Sinne eines minimierten Abstands biometrischer Merkmalsvektoren möglich ist, dabei jedoch auf Datenebene Artefakte verbleiben, welche eine Erkennung ermöglichen. Hierzu verwendet die Erfindung einen nicht-metrischen Klassifikator, welcher insbesondere statistische Abweichungen zwischen biometrischen Merkmalsvektoren auswertet. Weiterhin fußt die Erfindung auf der Erkenntnis, dass diese Auswertung umso besser funktioniert, wenn ein verifiziertes echtes Bild - insbesondere derselben Person - als Referenzmaterial zur Verfügung steht.

Vorzugsweise beruht der nicht-metrische Klassifikator auf Methoden des maschinellen Lernens und beinhaltet insbesondere eine statistische Klassifikation und/oder eine Clusterung. Dabei wird mit statistischen Methoden bei einer großen Anzahl von authentischen Darstellungen echter Personen ermittelt, wie die Unterschiede der Merkmalsvektoren zwischen zwei Bildern (insbesondere derselben Person) statistisch verteilt sind und welche Koinzidenzen bzw. Anti-Koinzidenzen der einzelnen Dimensionen des Biometrischen Vektors vorliegen. Beispielsweise lässt sich ermitteln, dass bestimmte Abweichungen und Diskrepanzen in einem bestimmten Bereich des Merkmalsvektors bei echten Bilddateien signifikant häufig bzw. selten mit Abweichungen in anderen Bereichen einhergehen. Eine Verletzung entsprechender aufgefundener Regeln kann dann als Hinweis für einen nichtauthentischen Ursprung der Eingabebilddatei gewertet werden. Diese statistischen Strukturen lassen sich mithilfe automatisierter statistischer Verfahren erkennen, ohne dass diese explizit formuliert werden müssen.

Besonders bevorzugt können zusätzlich eine große Anzahl an Deep Fakes generiert und dem maschinellen Lernen zugeführt werden. Anhand dessen kann ermitteln werden, wie sich bei diesen die statistische Verteilung von der echter Bildern unterscheidet.

Weiterhin ist es im Rahmen der Erfindung vorzugsweise möglich, dass der nicht-metrische Klassifikator zumindest ein neuronales Netz aufweist. Neuronale Netze werden verwende in den Schichten mathematische Gewichte, um einen Eingabewert zu einem Ausgabewert zu transformieren. Die Gewichte der neuronalen Netze lassen sich über ein sogenanntes Training einstellen, bei der diejenige Verteilung der Gewichte des Tensors bevorzugt wird, welche bei einem definierten Eingabewert zu dem gewünschten Ausgabewert führen.

Besonders bevorzugt wurde der nicht-metrische Klassifikator, insbesondere das neuronale Netz, mithilfe von verifizierten Porträtaufnahmen realer Personen trainiert. D. h. das neuronale Netz wurde derart eingestellt, dass bei einem Eingabewert einer verifizierten Bilddatei das Ergebnis ausgegeben wird, dass es sich um ein echtes genuines Bild handelt. Im Rahmen des Trainings führt dies dazu, dass die Gewichtungen des Tensors derart eingestellt werden, dass die statistischen Besonderheiten innerhalb der Datenstruktur eines verifizierten Echtbildes zum Ausgabewert der Bestätigung der Authentizität führen.

Ganz besonders bevorzugt wurde der nicht-metrische Klassifikator, insbesondere das neuronale Netz, ausschließlich mit Porträtaufnahmen realer Personen trainiert. Es handelt sich dabei um ein sogenanntes positiv-Training, einer bestimmten Art des unüberwachten Lernens, bei dem ohne zusätzliche Benutzereinwirkung und ohne Bereitstellung von Falschdaten eine Erkennung generiert werden kann.

Alternativ ist vorgesehen, dass der nicht-metrische Klassifikator, insbesondere das neuronale Netz, sowohl mit verifizierten Bildern zumindest einer realen Person als auch mit künstlich generierten Porträtaufnahmen, insbesondere derselben Personen trainiert sind. Vorzugsweise sind die künstlich generierten Bilder darauf optimiert einen möglichst geringen metrischen Abstand eines biometrischen Merkmalsvektors zu den realen Personen aufzuweisen. Beim Training des neuronalen Netzes wird also einerseits zu zumindest einer realen Person ein Referenzbild gegeben und andererseits zumindest ein optisch ähnliches Fake-Bild generiert, welches eine große optische Ähnlichkeit und daher einen geringen Abstand der biometrischen Merkmalsvektoren aufweist. Das neuronale Netz ist dann darauf eingerichtet, eben diese statistischen Varianzen zu erkennen, welche eine Unterscheidung zwischen einem echten Bild und einem künstlich erzeugten Bild ermöglichen.

Bevorzugt werden der erste Merkmalsvektor und der zweite Merkmalsvektor vor der Übergabe an der nicht-metrischen Klassifikator normalisiert. Dies Vereinfacht die Verarbeitung in dem nicht-metrischen Klassifikator und ggf. dessen Training.

Bei einem aus Komponenten Xᵢ (mit i zwischen 1 und n) bestehenden n-dimensionalen Merkmalsvektor kann beispielsweise jede der Komponenten entsprechend ihrer statistischen Verteilung mit einem Mittelwert mᵢ und einer Standardabweichung sᵢ normalisiert werden. Mittelwerte und Standardabweichungen lassen sich dabei insbesondere im Rahmen oder als Vorbereitung für ein Training des nicht-metrischen Klassifikators - insbesondere aus den Merkmalsvektoren verifizierter Bilddaten - ermitteln bzw. abschätzen. Die Komponenten des Merkmalsvektors werden dann zu X'ᵢ = (Xᵢ - mᵢ) / sᵢ normalisiert.

Vorzugsweise ist im Rahmen des erfindungsgemäßen Verfahrens vorgesehen, dass bei dem verifizierten Referenzbild sowohl das Vorliegen der Identität der abgebildeten Person als auch die korrekte Erfassung der Bilddatei bestätigt sind. Diese Bestätigung kann insbesondere durch eine vertrauenswürdige Person z. B. eine Amtsperson, ein vertrauenswürdiges System und/ oder Organisation erfolgen. Durch die doppelte Bestätigung des verifizierten Referenzbilds kann sichergestellt werden, dass das verifizierter Referenzbild einerseits dieselbe Person zeigt, welche die Eingabebilddatei vorgeblich darstellen soll und andererseits dass es sich dabei um ein nicht-manipuliertes authentisches Bild handelt.

Bevorzugt wird das verifizierte Referenzbild aus einer Datenbank mit verifizierten Referenzbildern geladen. Um zur Überprüfung einer Eingabebilddatei stets ein passendes Referenzbild zur Verfügung zu haben, ist es zweckmäßiger diese in einer Datenbank vorzubereiten und bei Bedarf abzurufen. Somit kann auf die Liveerfassung in Echtzeit verzichtet werden.

Insbesondere umfasst die Datenbank verifizierte Referenzbilder zu bekannten Persönlichkeiten des öffentlichen Lebens. Diese sind insbesondere anfällig dafür Opfer von Deep Fakes zu werden. Das zentralisierte Bereitstellen verifizierter Referenzbilder für das erfindungsgemäße Verfahren an unterschiedlichen Orten ist daher wünschenswert. Insbesondere bei Medienschaffenden und/oder Rezipienten, z. B. im Internet, live auf einen entsprechenden Service zugreifen, um lokal oder online eine entsprechende Überprüfung vorzunehmen.

Auch sind Einsatzszenarien denkbar, bei denen das verifizierte Referenzbild aus einem Ausweisdokument geladen wird. Moderne Lichtbildausweise enthalten häufig in Dateiform auch biometrische Porträtaufnahmen des Besitzers, welche unter kontrollierten Bedingungen aufgenommen und gespeichert wurden. Auch ist die Datenspeicherung auf einem Ausweisdokument in der Regel manipulationssicher ausgestaltet. Durch die Verwendung eines entsprechenden Ausweisbildes kann das erfindungsgemäße Verfahren mit großer Signifikanz eingesetzt werden. Eine mögliche Anwendung ist z. B. der Nachweis, dass eine Person das Opfer eines Fakes geworden ist, indem man das auf ihrem Ausweis gespeicherte Foto verwendet und eine Klassifikation als Fake im Rahmen des erfindungsgemäßen Verfahrens ermittelt.

Ebenso ist es denkbar, dass im Rahmen eines Anmelde- oder Antragsprozesses im Internet ein Porträtfoto des Antragstellers hochgeladen werden soll. Für die empfangende Stelle ist nicht ohne weiteres ersichtlich, ob es sich hierbei um ein echtes Foto oder eine möglicherweise zumindest zum Teil computergenerierte oder Computer-manipulierte Darstellung handelt. Indem insbesondere auf einem zweiten Datenkanal ein verifiziertes Ausweisfoto hochgeladen bereitgestellt wird, kann dann die Authentizität des hochgeladenen Antrags-Bildes durch das erfindungsgemäße Verfahren bestätigt werden.

Um das Ergebnis zu verbessern, kann das erfindungsgemäße Verfahren zu einer einzigen Eingabebilddatei mit mehreren unterschiedlichen verifizierten Referenzbildern (insbesondere derselben Person) durchgeführt werden. Dabei werden bei unterschiedlichen Durchläufen mehrere Ausgabewerte erzeugt. Anschließend werden die Ausgabewerte miteinander zu einem gemeinsamen Ausgabewert kombiniert. Diese Vorgehensweise hat den Vorteil, dass auch einzelne Falschklassifizierungen oder ein indifferente Ergebnisse bei einer Klassifizierung durch das Ergebnis weiterer Ausgabewerte näher bestimmt werden können. Der gemeinsame Ausgabewert kann beispielsweise ein Durchschnitt der einzelnen Ausgabewerte sein. Ebenso ist die Verwendung eines Medianwerts, eines Wertebereichs oder einer statistischen Streuung möglich. Durch insbesondere die Streuung kann dabei ein Maß für die Sicherheit des Gesamtergebnisses sein.

Als Eingabe für den nicht-metrischen Klassifikator können die beiden Merkmalsvektoren insbesondere separat, d. h. als unabhängige Eingabewerte oder als aneinander angehängte Einngabewerte aufgenommen werden. Ebenso ist auch die Speisung des nicht-metrischen Klassifikators mit einer Differenz oder einer Verschränkung wie beispielsweise über eine XOR-Verknüpfung denkbar. Entsprechend entspricht die Eingabelänge des nicht-metrischen Klassifikators der einfachen bzw. doppelten Länge der biometrischen Merkmalsvektoren. Die Verschränkung hat überdies den Vorteil eines verbesserten Datenschutzes bei eine verteilten Durchführung des erfindungsgemäßen Verfahrens, bei der nur die Verschränkung an den nicht-metrischen Klassifikator übermittelt werden und die Quelldaten der Eingabebilddatei und des verifizierten Referenzbilds bzw. deren Repräsentationen als biometrische Merkmalsvektoren das Quellsystem nicht verlassen müssen.

Vorzugsweise umfasst der erste Merkmalsvektor (3a) einen ersten biometrischen Merkmalsvektor und der zweite Merkmalsvektor (3b) einen zweiten biometrischen Merkmalsvektor. Diese erfindungsgemäße Variante beruht auf der Analyse von biometrischen Merkmalsvektoren. Derartige Vektoren werden in der computergestützten Gesichtserkennung eingesetzt. Dabei repräsentieren mehrdimensionale Datenpunkte Merkmale, welche mit bestimmten geometrischen Relationen in der Darstellung eines Gesichts korrelieren. Beispielsweise gehen die relative Position und der Abstand von Augen, Nase und Mund mit in die biometrische Charakterisierung des Gesichts mit ein ebenso wie Texturen durch Falten oder Flecken. Auch wenn einzelne biologische Abmessungen nicht unmittelbar aus einem biometrischen Merkmalsvektor entnommen werden können, ist diese jedoch so eingerichtet, dass ein geringer metrischer Vektorabstand einer großen biometrischen Ähnlichkeit entspricht. Biometrische Vektoren mit geringem Abstand im Sinne einer Metrik werden von einem menschlichen Betrachter daher als ähnliche oder identische Personen rezipiert.

Gemäß einer besonders bevorzugten Ausgestaltung des erfindungsgemäßen Verfahrens werden der erste biometrische Merkmalsvektor und der zweite biometrische Merkmalsvektor mit einer zur Gesichtserkennung eingerichteten Analyseeinheit ermittelt. Diese ist dazu eingerichtet Merkmale eines Gesichts zu extrahieren und zu quantifizieren.

Gemäß eine bevorzugten Variante weist die Analyseeinheit ein neuronales Netz, insbesondere ein Faltungsnetzwerk (convolutional network) auf. Alternativ oder zusätzlich kann die Analyseeinheit auch einen sog. Transformer aufweisen, welcher Bilder und/oder Bildbestandteile in sog. Tokens umsetzt.

Die Analyseeinheit ist vorzugsweise so eingerichtet, um aus einer Bilddatei über ein oder mehrere Zwischenergebnisse ein (reguläres) Endergebnis entsprechend der ursprünglichen Zweckbestimmung - z.B: Gesichtserkennung - zu ermitteln. Im Rahmen einer besonders bevorzugten Variante der Erfindung wird der insbesondere biometrische Merkmalsvektor aus der Analyseeinheit ausgeschleust. Das heißt, zumindest ein Zwischenergebnis aus der Analyseeinheit wird als Merkmalsvektor verwendet - insbesondere ohne dass das Endergebnis berechnet und/oder im Rahmen des Verfahrens verwendet wird. Vorzugsweise ist weiß das als Merkmalsvektor ausgeschleuste Zwischenergebnis eine größere Datenbreite auf als das reguläre Endergebnis.

Sowohl die Eingabe Bilddatei als auch die Referenzdatei enthalten jeweils die Darstellung eines menschlichen Gesichts. Dabei kann es sich insbesondere um frontale Porträtaufnahmen handeln. Ebenso sind auch Eingabedateien möglich, welche lediglich in einem Ausschnitt das menschliche Gesicht und auch nicht notwendigerweise frontal aufgenommen zeigen. Zur besseren Vergleichbarkeit ist - vor der Ermittlung des biometrischen Merkmalsvektors - bei der Eingabebilddatei und/oder dem verifizierten Referenzbild bevorzugt vorgesehen, unter mehreren erkannten Gesichtern eines oder mehrere auszuwählen, den Bildausschnitt zuzuschneiden und/oder das Bild geeignet zu rotieren. Dadurch wird die Datenqualität bei der Berechnung des biometrischen Merkmalsvektors verbessert und deren Ergebnisse vergleichbar ausgestaltet.

Gemäß einer ersten bevorzugten Variante besteht der erste Merkmalsvektor aus dem ersten biometrischen Merkmalsvektor und der zweite Merkmalsvektor aus dem zweiten biometrischen Merkmalsvektor. In dieser Ausführungsform beruht die Erkennung der Fakes ausschließlich auf der Auswertung der (biometrischen) Bildinformationen. Dies ist insbesondere deshalb von Vorteil, da zusätzliche Informationen oder Metadaten fehlen oder - gerade im Kontext von Fakes - gefälscht sein können.

Gemäß einer alternativen bevorzugten Variante umfassen der erste Merkmalsvektor und der zweite Merkmalsvektor jeweils zusätzliche Daten (über den ersten Biometrischen Merkmalsvektor und den zweiten biometrischen Merkmalsvektor hinaus). Dadurch kann die Erkennungsqualität des erfindungsgemäßen Verfahrens weiter verbessert werden. Insbesondere sind die zusätzlichen Daten ein oder mehrere ausgewählt aus: Meta-Daten Eingabebilddatei und des verifizierten Referenzbilds, insbesondere vermuteter, geschätzter, vorgeblicher oder verifizierter Aufnahmezeitpunkt; zeitlicher Abstand der Aufnahmezeitpunkte; (insbesondere algorithmische) Quantifizierung der Qualität der Gesichtsbilder; Geschlecht, Alter und/oder Ethnie der abgebildeten Person.

Vorzugsweise ist vorgesehen, dass der Ausgabewerte in zumindest eine Kategorie eingeteilt wird. Diese Kategorien können zumindest die Werte "positiv" und "negativ" bezogen auf die Authentizität der Eingabebilddatei beinhalten. Besonders bevorzugt ist zumindest ein weiterer Zustand vorgesehen, welcher einer Unsicherheit entsprechen kann. Diese Klassifizierung kann insbesondere bestimmten Schwellen bei den Ausgabewerten des nicht-metrischen Klassifikators entsprechen. Diese können so ausgewählt werden, dass eine gewünschte Sensitivität und/oder Spezifität erreicht wird. Beispielsweise kann bei einem Ausgabewerte von 0,1 oder weniger ein Positivsignal, bei einem Ausgabewerte von 0,8 und darüber Negativsignal und dazwischen ein indifferentes Signal ausgegeben werden. Der klassifizierte Ausgabewert kann als Grundlage für eine weitere Benutzeraktion und/oder einen automatischen Verfahrensablauf dienen.

Besonders bevorzugt wird das Ergebnis der Klassifikation und/oder der Ausgabewert einem Benutzer zugeleitet und angezeigt. Dieser kann dann über die weitere Verwendung der technischen Klassifikation entscheiden und diese in einem weiteren Verfahrensprozess mit einbeziehen.

Alternativ oder zusätzlich kann vorgesehen sein, dass das Ergebnis einer Sicherheitseinrichtung, insbesondere einer Zugangssteuerungseinrichtung zugeleitet wird. Anhand der Klassifikation kann ein Zugang für eine Person verweigert, gewährt oder von einer weiteren, manuellen Überprüfung abhängig gemacht werden. Insbesondere sind dabei Anwendungsszenarien denkbar, bei denen das Referenzbild der Person vor Ort aufgenommen und die Eingabebilddatei aus einer weiteren Datenquelle übernommen wird. Bei dieser weiteren Datenquelle kann es sich beispielsweise um eine vorab-Registrierung und/oder ein Ausweisdokument handeln. Somit kann insbesondere ein Missbrauch durch eine manipulierte oder Computer-generierte Bilddatei aufgedeckt und entsprechend sanktioniert werden.

Sofern das Referenzbild insbesondere zur Ausführungszeit in einer kontrollierten Umgebung, insbesondere einer Sicherheitseinrichtung aufgenommen wird, kann in Abhängigkeit von dem Ausgabewert bzw. der Klassifikation des Ausgabewerts eine vordefinierte Aktion ausgelöst werden. Insbesondere bei Erkennen einer Fälschung kann neben dem Verweigern des Zutritts zu einem geschützten Bereich auch eine Sicherheitsaktion ausgelöst werden. Die Sicherheitsaktion kann neben der manuellen separaten Überprüfung durch eine Aufsichtsperson auch das temporäre Festsetzen der Person in der Sicherheitseinrichtung beinhalten.

Gegenstand der Erfindung ist auch ein System zur Datenverarbeitung umfassend Mittel zur Ausführung des zuvor beschriebenen Verfahrens. Insbesondere sind dabei ein Mittel zur Bereitstellung, insbesondere zum Laden, Empfangen und Aufnehmen zumindest eines verifizierten Referenzbildes vorgesehen. Weiterhin ist ein Mittel zu Berechnung eines ersten und/oder zweiten Merkmalsvektors aus einer Eingabebilddatei bzw. aus dem verifizierten Referenzbild sowie ein nicht-metrischer Klassifikator zur Berechnung eines Ausgabewerts aus den biometrischen Merkmalsvektoren vorgesehen.

Gemäß einer bevorzugten Ausführungsform ist das System zur Datenverarbeitung verteilt ausgebildet. Dabei ist zumindest das Mittel zur Bereitstellung eines verifizierten Referenzbildes von zumindest einem Mittel zur Datenverarbeitung ortsverschieden angeordnet. Dieses kann insbesondere als Datenbank ausgebildet sein. Besonders bevorzugt ist das ortsverschiedene Mittel zur Datenverarbeitung kryptographisch und baulich gesichert ausgebildet. Dadurch kann eine Manipulation des verifizierten Referenzbildes ausgeschlossen werden.

Das System zur Datenverarbeitung umfasst bevorzugt eine Analyseeinheit, mit deren Hilfe aus einer Bilddatei - z.B. der Eingabebilddatei oder einem (verifizierten) Referenzbild - ein Merkmalsvektor bestimmt werden kann. Besonders bevorzugt umfasst die Analyseeinheit um ein deep neural network (DNN) zur biometrischen Gesichtserkennung, welches auf zumindest einer Recheneinheit (z.B. CPU, GPU, APU, TPU, VPU, FPGA oder QPU) ausgeführt wird. Insbesondere werden die Merkmalsvektoren mit dem deep neural network (DNN) berechnet oder vor dem finalen Layer ausgeschleust.

Weiterer Gegenstand der Erfindung ist Computerprogrammprodukt umfassend Befehle, die bei der Ausführung durch einen oder mehrere Computer diese veranlassen das zuvor beschriebene Verfahren auszuführen.

Vorzugsweise umfasst das Computerprogrammprodukt ein neuronales Netzwerk zur biometrischen Gesichtserkennung sowie eine Programmroutine, um einen biometrischen Merkmalsvektor mit dem neuronalen Netzwerk zu berechnen oder aus dem Inneren des neuronalen Netzwerks, insbesondere unmittelbar vor dem finalen Layer, auszulesen.

Insbesondere weist das Computerprogrammprodukt einen nicht-metrischen Klassifikator auf, der dazu eingerichtet ist aus einem ersten biometrischen Merkmalsvektor einer Eingabebilddatei und einem zweiten biometrischen Merkmalsvektor eines verifizierten Referenzbilds einen Ausgabewert zu berechnen, welcher der Wahrscheinlichkeit entspricht, dass die Eingabebilddatei das Produkt einer künstlichen Bildgenerierung oder-Manipulation ist.

Gemäß einer bevorzugten Variante umfasst der Klassifikator einen Satz von Regeln zur statistischen Clusterung. Alternativ oder zusätzlich kann der Klassifikator ein weiteres neuronales Netzwerk umfassen.

Die Erfindung wird nachfolgend anhand einer lediglich ein Ausführungsbeispiel darstellenden Figur erläutert. Diese zeigt schematisch:

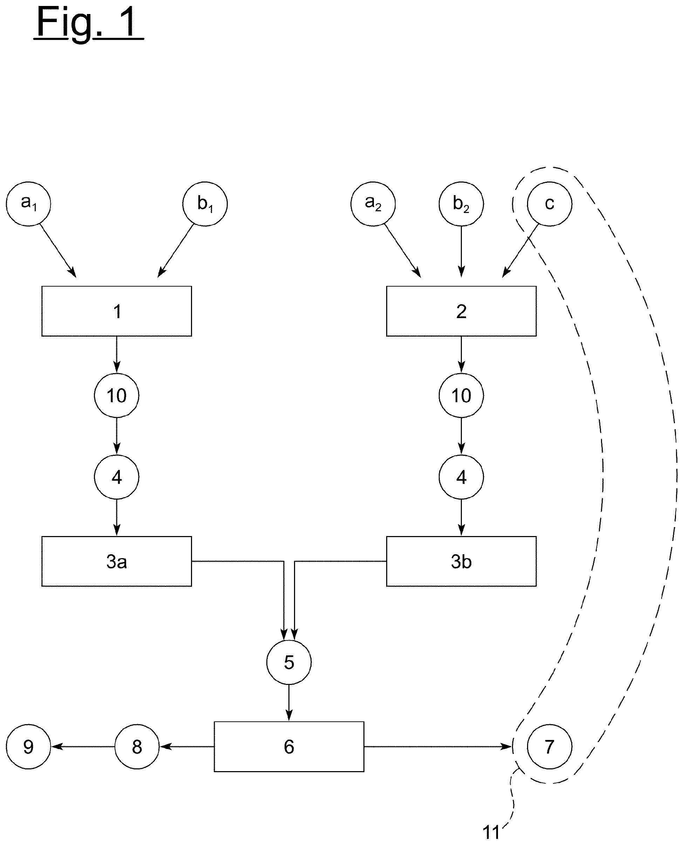

- Fig. 1: ein Ablaufdiagramm des erfindungsgemäßen Verfahrens gemäß einer Ausführungsform.

Die Fig. 1 zeigt schematisch ein Computer-implementiertes Verfahren zur Bewertung der Authentizität einer das Gesicht einer Person darstellen Eingabebilddatei 1. Dabei wird zunächst eine Eingabebilddatei 1 bereitgestellt, indem diese von einem Computersystem a₁ empfangen oder von einem Datenspeicher b₁ geladen wird. Weiterhin wird ein verifiziertes Referenzbild 2 bereitgestellt, indem dieses von einem weiteren Computersystem a₂ empfangen, aus einem weiteren Datenspeicher b₂ geladen oder mit einem Kamerasystem c aufgenommen wird. Insbesondere stellt dabei das verifizierte Referenzbild 2 dieselbe Person dar wie die Eingabebilddatei 1.

Aus der Eingabebilddatei 1 wird ein erster Merkmalsvektor 3a, welcher aus einem ersten biometrischen Merkmalsvektor besteht, ermittelt und aus dem verifizierten Referenzbild 2 ein zweiter Merkmalsvektor 3b ermittelt, welcher aus einem zweiten biometrischen Merkmalsvektor besteht. Vorzugsweise werden der erste und der zweite Merkmalsvektor 3a,b durch dieselbe biometrische Analyseeinheit 4 berechnet. Alternativ können auch der erste biometrischer Merkmalsvektor 3a und der zweite biometrische Merkmalsvektor 3b durch nach denselben Programmregeln arbeitende separate Analyseeinheiten verarbeitet werden. **In** dem dargestellten Ausführungsbeispiel handelt es sich bei der Analyseeinheit 4 um ein Neural Network.

Anschließend werden die beiden Merkmalsvektoren 3a, b einem nicht-metrischen Klassifikator 5 zugeleitet, welcher einen Ausgabewert 6 im Intervall zwischen 0 und 1 ermittelt. Der Ausgabewert 6 wird in der dargestellten Fassung beispielhaft einer Sicherheitseinrichtung 7 als Rohwert zugeführt. Weiterhin ist vorgesehen, dass nach Durchlaufen eines Klassifikators 8 die ermittelte Klassifizierung - positiv, negativ oder indifferent - einer Benutzeranzeigeeinrichtung 9 zugeführt wird.

Um die Erkennungsrate zu verbessern und eine bessere Vergleichbarkeit herzustellen ist weiterhin sowohl für die Eingabebilddatei 1 sowie auch für das verifizierten Referenzbild 2 vor der Berechnung des metrischen Merkmalsvektors in der Analyseeinheit 4 eine Normalisierung 10 vorgelagert. Dabei wird der Ausschnitt des Bildes 1, 2 auf eine formatfüllende Frontalaufnahme zugeschnitten und optische Verzerrungen mit mathematischen Modellen ausgeglichen.

**In** der dargestellten Ausführungsform sind sowohl die Sicherheitseinrichtung 7 als auch die Kamera c Bestandteile einer Zugangskontrolleinrichtung 11. Diese kann insbesondere auch eine nicht dargestellte Zugangsschleuse aus zumindest zwei hintereinander angeordneten und unabhängig steuerbaren Türen umfassen.

### Bezugszeichenliste

- (1): Eingabebilddatei
- (2): verifiziertes Referenzbild
- (3a): Merkmalsvektor
- (3b): Merkmalsvektor
- (4): Analyseeinheit
- (5): nicht-metrischer Klassifikator
- (6): Ausgabewert
- (7): Sicherheitseinrichtung
- (8): Klassifikator
- (9): Benutzeranzeigeeinrichtung
- (10): Normalisierung
- (11): Zugangskontrolleinrichtung
- (a1): Computersystem
- (a2): Computersystem
- (b1): Datenspeicher
- (b2): Datenspeicher
- (c): Kamera

## Patentansprüche

1. Computerimplementiertes Verfahren zur Bewertung der Authentizität einer das Gesicht einer Person darstellenden Eingabebilddatei (1), insbesondere zur Erkennung von durch Kl-Verfahren synthetisch erzeugten Bildern, umfassend die Schritte:
• Empfangen oder Laden der Eingabebilddatei (1),
• Empfangen, Laden oder Aufnehmen eines verifizierten Referenzbildes (2), welches das Gesicht einer Person darstellt,
• Ermitteln eines ersten Merkmalsvektors (3a) aus der Eingabebilddatei (1),
• Ermitteln eines zweiten Merkmalsvektors (3b) aus dem Referenzbild (2) und
• Ermitteln eines Ausgabewerts (6) aus dem ersten Merkmalsvektor (3a) und dem zweiten Merkmalsvektor (3b) durch einen nicht-metrischen Klassifikator (5).

2. Verfahren nach Anspruch 1 ferner umfassend den Schritt:
• Ausgeben oder Versenden des Ausgabewerts (6) oder einer aus dem Ausgabewert (6) abgeleiteten Größe.

3. Verfahren nach Anspruch 1 oder 2, **dadurch gekennzeichnet, dass** der nicht-metrische Klassifikator (5) eine statistische Klassifikation und/oder eine Clusterung beinhaltet.

4. Verfahren nach einem der Ansprüche 1 bis 3, **dadurch gekennzeichnet, dass** der nicht-metrische Klassifikator (5) ein neuronales Netz aufweist.

5. Verfahren nach einem der Ansprüche 1 bis 4, **dadurch gekennzeichnet, dass** der nicht-metrische Klassifikator (5) mithilfe von verifizierten Porträtaufnahmen realer Personen trainiert wurde.

6. Verfahren nach Anspruch 5, **dadurch gekennzeichnet, dass** der nicht-metrische Klassifikator (5) ausschließlich mit Porträtaufnahmen realer Personen trainiert wurde.

7. Verfahren nach Anspruch 5, **dadurch gekennzeichnet, dass** der nicht-metrische Klassifikator (5) sowohl mit verifizierten Bildern zumindest einer realen Person als auch mit künstlich generierten Bildern derselben Person trainiert wurde, welche auf einen geringen metrischen Abstand eines biometrischen Merkmalsvektors optimiert sind.

8. Verfahren nach einem der vorangegangenen Ansprüche 1 bis 7, **dadurch gekennzeichnet, dass** bei dem verifizierten Referenzbild (2) sowohl das Vorliegen der Identität der abgebildeten Person als auch die korrekte Erfassung der Bilddatei, insbesondere durch eine vertrauenswürdige Person, z. B. Amtsperson, bestätigt werden.

9. Verfahren nach einem der vorangegangenen Ansprüche 1 bis 8, **dadurch gekennzeichnet, dass** das verifizierte Referenzbild (2) aus einer Datenbank mit verifizierten Referenzbildern (2) geladen wird.

10. Verfahren nach einem der Ansprüche 1 bis 8, **dadurch gekennzeichnet, dass** das verifizierte Referenzbild (2) aus einem Ausweisdokument geladen wird.

11. Verfahren nach einem der Ansprüche 1 bis 10, **dadurch gekennzeichnet, dass** zu einer Eingabebilddatei (1) das Verfahren mit mehreren verifizierten Referenzbildern (2) durchgeführt wird, wobei mehrere Ausgabewerte (6) erzeugt werden und dass die Ausgabewerte (6) miteinander zu einem gemeinsamen Ausgabewerts kombiniert werden.

12. Verfahren nach einem der Ansprüche 1 bis 11, **dadurch gekennzeichnet, dass** der erste Merkmalsvektor (3a) einen ersten biometrischen Merkmalsvektor umfasst und dass der zweite Merkmalsvektor (3b) einen zweiten biometrischen Merkmalsvektor umfasst.

13. Verfahren nach Anspruch 12, **dadurch gekennzeichnet, dass** der dass der erste Merkmalsvektor (3a) aus dem ersten biometrischen Merkmalsvektor bestehet und dass der zweite Merkmalsvektor (3b) aus dem zweiten biometrischen Merkmalsvektor besteht.

14. Verfahren nach einem der Ansprüche 1 bis 13, **dadurch gekennzeichnet, dass** der erste Merkmalsvektor (3a) und der zweite Merkmalsvektor (3b) jeweils zusätzliche Daten umfassen.

15. Verfahren nach einem der Ansprüche 1 bis 14, **dadurch gekennzeichnet, dass** der Ausgabewert (6) in eine Kategorie eingeteilt wird, welche zumindest positiv und negativ und besonders bevorzugt zumindest einen weiteren Zustand umfassen.

16. Verfahren nach einem der Ansprüche 1 bis 15, **dadurch gekennzeichnet, dass** das Ergebnis der Klassifikation und/oder ein Ausgabewert (6) einem Benutzer zugeleitet und angezeigt werden.

17. Verfahren nach einem der Ansprüche 1 bis 16, **dadurch gekennzeichnet, dass** der Ausgabewert (6) einer Sicherheitseinrichtung (7), insbesondere Zugangssteuerungseinrichtung zugeleitet wird.

18. Verfahren nach einem der Ansprüche 1 bis 17, **dadurch gekennzeichnet, dass** das Referenzbild (2) insbesondere zur Ausführungszeit des Verfahrens, in einer kontrollierten Umgebung, insbesondere in einer Sicherheitseinrichtung (7) wie z. B. einer Zugangskontrolleinheit aufgenommen wird und in Abhängigkeit von dem Ausgabewert eine vordefinierte Aktion ausgelöst wird.

19. System zur Datenverarbeitung umfassend Mittel zur Ausführung der Schritte eines Verfahrens nach einem der Ansprüche 1 bis 18, mit einem Mittel (a₂, b₂, c) zur Bereitstellung zumindest eines verifizierten Referenzbilds (2), mit zumindest einem Mittel (4) zur Berechnung eines ersten und/oder zweiten Merkmalsvektors (3a, 3b) aus einer Eingabebilddatei (1) bzw. dem verifizierten Referenzbild (2) und mit einem nicht-metrischen Klassifikator (5) zur Berechnung eines Ausgabewerts (6) aus zumindest zwei Merkmalsvektoren (3a, 3b).

20. System zur Datenverarbeitung nach Anspruch 19, **dadurch gekennzeichnet, dass** zumindest das Mittel zu Bereitstellung eines verifizierten Referenzbilds (2) von den übrigen Mitteln zur Datenverarbeitung ortsverschieden sowie kryptografisch und baulich gesichert ausgebildet ist.

21. Computerprogrammprodukt umfassend Befehle, die bei der Ausführung durch einen Computer diesen veranlassen, das Verfahren nach einem der Ansprüche 1 bis 18 auszuführen.
